**Europäisches Patentamt**

**European Patent Office**

**Office européen des brevets**

(11) Veröffentlichungsnummer: **0 194 560**
**A2**

# EUROPÄISCHE PATENTANMELDUNG

(21) Anmeldenummer: **86102834.8**

(22) Anmeldetag: **04.03.86**

(51) Int. Cl.4: **B29D 30/00**

(30) Priorität: **05.03.85 DE 3507705**

(43) Veröffentlichungstag der Anmeldung:
**17.09.86 Patentblatt 86/38**

(84) Benannte Vertragsstaaten:
**AT BE CH DE FR GB IT LI LU NL SE**

(71) Anmelder: **Continental Gummi-Werke**
**Aktiengesellschaft**
**Königsworther Platz 1**
**D-3000 Hannover 1(DE)**

(72) Erfinder: **Rach, Heinz-Dieter**
**Planetenring 32**
**D-3008 Garbsen 1(DE)**
Erfinder: **Frerichs, Udo**
**Buchenweg 7**
**D-3012 Langenhagen 8(DE)**
Erfinder: **Klose, Hans-Ulrich**
**Hauptstrasse 15**
**D-3061 Wiedensahl(DE)**
Erfinder: **Boltze, Carsten**
**Buschweg 7**
**D-3015 Wenningsen(DE)**

(54) **Verfahren zur Herstellung eines Fahrzeugluftreifens.**

(57) Die Erfindung bezieht sich auf ein Verfahren zur Herstellung eines Fahrzeugluftreifens, der mit seinen Wülsten am radial inneren Umfang einer Felge montierbar ist und bei dem die Wülste relativ zu den Wulstkernen verschwenkbar sind. Um den vollständigen Reifenrohling in der Betriebsstellung des Reifens vulkanisieren zu können, wird vorgeschlagen, daß zunächst die Karkasse mit den benachbarten Kautschukschichten und die Reifenwülste mit zug-und druckfesten Wulstkernen auf einer Wickeltrommel zu einem im wesentlichen zylinderförmigen Rohling zusammengefügt werden, wobei die spätere Reifeninnenseite nach radial außen weist und die Begrenzungsflächen der sich nach radial außen erstreckenden Reifenwülste mit der Zylinderwand des Rohlings im wesentlichen rechte Winkel einschließen, daß danach der Rohling zumindest im Bereich der Reifenwülste vorvulkanisiert wird, daß er anschließend gekrempelt und nach dem Einnehmen einer Toroidform mit dem Laufstreifen versehen und fertigvulkanisiert wird.

*FIG. 2*

EP 0 194 560 A2

Verfahren zur Herstellung eines Fahrzeugluftreifens

Die Erfindung betrifft ein Verfahren zur Herstellung eines Fahrzeugluftreifens, der mit seinen Wülsten am radial inneren Umfang einer Felge montierbar ist und bei dem die Wülste verschwenkbar sind.

Es sind mit einem solchen Fahrzeugluftreifen versehene Fahrzeugräder bekannt, die sich für einen sogenannten Notlauf besonders gut eignen und bei denen der Fahrzeugluftreifen in fast allen Fahreigenschaften den herkömmlichen Reifen überlegen ist. Ein derartiges Fahrzeugrad wird z.B. in der DE-OS 30 00 428 beschrieben. Bei diesem Fahrzeugrad befinden sich die Dichtflächen des Reifens, d.h. die Flächen, die den Reifen luftdicht zur Felge hin abschließen, im radial äußeren Bereich der Wulstzone, also im Reifeninnenraum. Damit ergeben sich aber gegenüber herkömmlichen Reifen erhebliche Herstellungsprobleme, weil es äußerst schwierig ist, an den genannten Stellen glatte Flächen bei der Konfektionierung und Vulkanisation des Reifens zu erzeugen.

In der DE-OS 32 46 624 wurde zur Lösung dieses Problems vorgeschlagen, den Reifenrohling in einer sogenannten Trapezstellung zu vulkanisieren, d.h. mit seitlich nach außen geschwenkten Reifenwülsten. Dieses Verfahren birgt jedoch den Nachteil in sich, daß bei dem Zurückschwenken der Reifenwülste in die Betriebsstellung des Reifens Spannungen in den Seitenwänden und Wülsten des Reifens auftreten können, die die ansonsten guten Eigenschaften des Reifens negativ beeinflussen können.

Der Erfindung liegt deshalb die Aufgabe zugrunde, ein Fertigungsverfahren für die genannten Fahrzeugluftreifen anzugeben, bei dem die Reifen bereits in ihrer Betriebsstellung konturgerecht vulkanisiert werden können.

Diese Aufgabe wird erfindungsgemäß dadurch gelöst, daß zunächst die Karkasse mit den benachbarten Kautschukschichten und die Reifenwülste mit zug-und druckfesten Wulstkernen auf einer Wickeltrommel zu einem im wesentlichen zylinderförmigen Rohling zusammengefügt werden, wobei die spätere Reifeninnenseite nach radial außen weist und die Begrenzungsflächen der sich nach radial außen erstreckenden Reifenwülste mit der Zylinderwand des Rohlings im wesentlichen rechte Winkel einschließen, daß danach der Rohling zumindest im Bereich der Reifenwülste vorvulkanisiert wird, daß er anschließend gekrempelt und nach dem Einnehmen einer Toroidform mit dem Laufstreifen versehen und fertigvulkanisiert wird.

Eine bevorzugte Ausführungsart der Erfindung zeichnet sich dadurch aus, daß der Rohling mit der Karkasse und den Reifenwülsten in eine Querschnittsform gebracht wird, bei der die Kontur der Reifenwülste und des größen Teils der Seitenwände bereits der Kontur am fertigen Reifen entspricht und bei der die Karkasse in der neutralen Zone verläuft, daß der Rohling in dieser Form vorvulkanisiert, danach gekrempelt, vervollständigt und fertigvulkanisiert wird. Bei dieser Herstellungsart wird eine Spannungsfreiheit der Karkasse in der Betriebsstellung des Reifens gewährleistet, weil die Karkasse sich im Rohling im Bereich der neutralen Zone befindet.

Der wesentliche Vorteil der Erfindung besteht darin, daß durch das Vorformen des Reifenrohlings im Wulst-und unteren Seitenwandbereich und durch das Stabilisieren dieser Form mit Hilfe einer Vorvulkanisierung der Reifen in einer üblichen Vulkanisierform in seiner endgültigen Kontur fertigvulkanisiert werden kann. Das Vorformen der genannten Bereiche gestaltet sich besonders einfach, weil bei der Konfektionierung des Reifenrohlings auf der Wickeltrommel das spätere Reifeninnere radial außen liegt, so daß die zu formenden Bereiche leicht zugänglich sind und mit Hilfe von üblichen Rollen und Formteilen beaufschlagt werden können. Das Vorvulkanisieren der Wulstbereiche kann sowohl auf der Wickeltrommel als auch in einer andernorts befindlichen Vulkanisiervorrichtung durchgeführt werden. Nach dem Vorvulkanisieren der Reifenwülste wird der Reifenrohling gekrempelt, so daß die Innenseele von außen nach innen kommt und das Aufbringen eines Laufstreifens und Bombieren des Reifens erfolgen kann.

Vorteilhafte Ausgestaltungen der Erfindung sind den Unteransprüchen zu entnehmen. Nachfolgend wird ein Ausführungsbeispiel der Erfindung anhand einer Zeichnung näher erläutert. Es zeigt

Fig. 1 einen Reifenrohling, wie er auf einer Wickeltrommel konfektioniert wird, in einem radialen Teilschnitt,

Fig. 2 den Reifenrohling der Fig. 1 mit einer schematisch angedeuteten Vulkanisiervorrichtung für die Reifenwülste in einem radialen Teilschnitt,

Fig. 3 den Reifenrohling der Fig. 1, jedoch in einer Querschnittsform, bei der die Reifenwülste und die Seitenwände bereits die Kontur des fertigen Reifens aufweisen, in einem radialen Teilschnitt,

Fig. 4 einen fertigen Reifen in seiner Betriebsstellung auf einer strichpunktiert angedeuteten Felge in einem radialen Teilschnitt.

Die Herstellung eines Reifens geschieht zunächst durch Konfektionierung eines Reifenrohlings auf einer Wickeltrommel, wobei der Reifenrohling aus der Reifenkarkasse 1, zug-und druckfesten Wulstkernen 2 und dem Kautschuk der Reifenwülste 3 besteht und gegebenenfalls bereits den Innenseelenkautschuk aufweist. Die Einzelteile des Rohlings werden in der Weise auf der Wickeltrommel zusammengebaut, daß sich das spä tere Reifeninnere zunächst radial außen befindet. Es ist zweckmäßig, bereits auf der Wickeltrommel dem Reifenrohling im Bereich der Reifenwülste 3 die endgültige Form zu geben, so daß der ansonsten zylinderförmige Rohling mit den späteren Sitzflächen 4 und den nahezu senkrechten Begrenzungsflächen 5 der Reifenwülste 3 nach radial außen hin vorsteht. Diese Formgebung kann durch bekannte Anroller sowie andere von außen heranführbare Formmittel erzeugt werden.

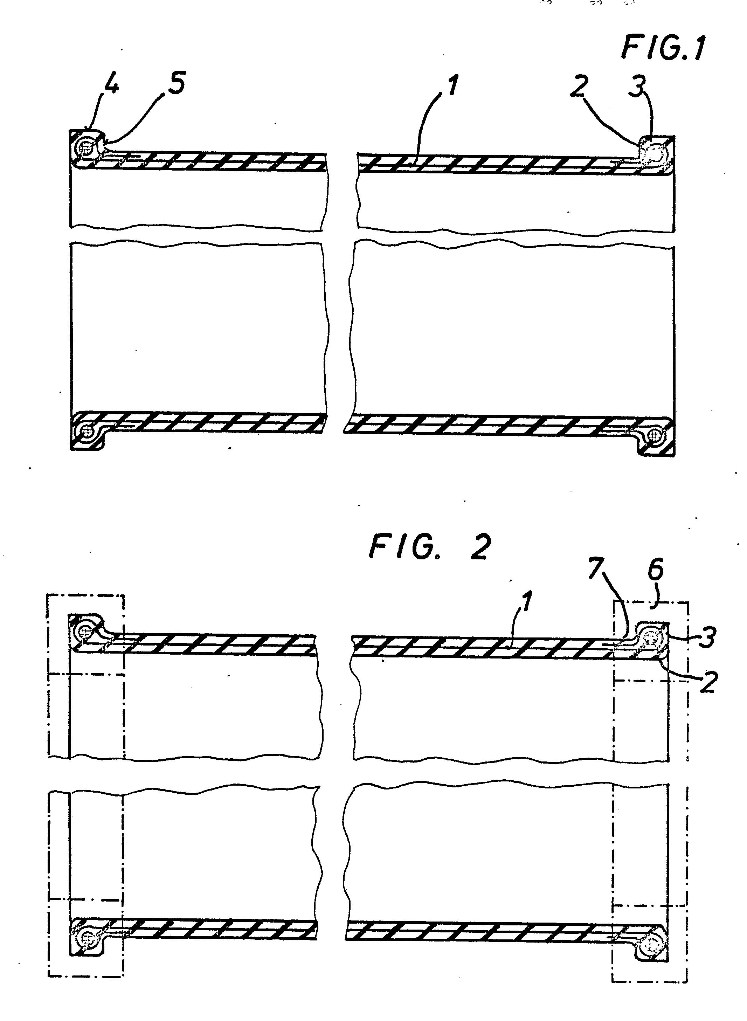

Nachdem der Reifenrohling in der im wesentlichen zylinderförmigen Form konfektioniert ist, wird er im Bereich der Reifenwülste 3 vorvulkanisiert, wie es in Fig. 2 durch je eine strichpunktiert angedeutete Vulkanisiervorrichtung 6 für jeden Reifenwulst 3 angedeutet ist. Das Vorvulkanisieren des Reifenrohlings kann prinzipiell auf der Wickeltrommel oder aber an jedem anderen Ort erfolgen. Das Vorvulkanisieren hat hauptsächlich den Zweck, dem Rohling im Bereich der Sitzflächen 4 der Begrenzungsflächen 5 und der benachbarten Teile 7 der Seitenwände bereits die endgültige Form mit einer äußerst glatten Oberfläche zu verleihen, so daß sich bei der weiteren Herstellung des Reifens die Form dieser Bereiche nicht mehr verändern kann.

Es sollte angemerkt werden, daß die Reifenwülste 3 - schwenkbar ausgebildet sein müssen. Unter schwenkbar ist eine Drehung des Wulstes 3 um eine Achse zu verstehen, die in Reifenumfangsrichtung weist. Zum einen kann die Drehung des Wulstes 3 um eine durch den Kernquerschnittsmittelpunkt gehende Achse in der Weise erfolgen, daß der Wulst 3 streckenweise um einen gewissen Winkel verdrillbar ist, der von den Materialeigenschaften und dem Aufbau des Wulstkerns 2 und des übrigen Wulstes 7 abhängt. Zum anderen ist die Drehbewegung des Wulstes 3 um den Wulstkern 2 dadurch erzielbar, daß der Wulstkern 2 nichthaftend in den Wulst 3 eingebettet wird, z.B. durch Umwickeln mit einem Gewebestreifen, der, -gegebenenfalls nacht entsprechender Vorbehandlung -eine Haftung mit dem benachbarten Material verhindert. Schließlich kann die Relativbewegung beim Schwenken des Wulstes 3 auch zwischen einzelnen Schichten des Kerns erfolgen.

Nach dem Vorvulkanisieren der Reifenwülste 3 wird der zylinderförmige Reifenrohling gekrmpelt, so daß die Außenwand nach innen kommt. Die für die Innenseele bestimmte Kautschukschicht wird zweckmäßigerweise gleich bei der Herstellung des Rohlings mit aufgelegt, kann bei Bedarf jedoch auch nach dem Krempeln des Rohlings eingebracht werden. Anschließend wird der Reifenrohling auf übliche Weise in eine Toroidform gebracht, indem er in einen herangeführten Laufstreifen 8 hineinbombiert wird und gegebenenfalls die noch fehlenden Seitenwandstreifen 9 aufgelegt werden. Danach besitzt der Reifenrohling bereits die endgültige Kontur mit den vorgeformten Flächen 4, 5 und 7 im Reifeninnenraum, und er wird mit dieser Kontur, die der Betriebsstellung des fertigen Reifens entspricht, in einer üblichen Vulkanisierform fertigvulkanisiert. Das Fertigvulkanisieren kann balglos oder aber auch unter Verwendung eines üblichen Heizbalgs erfolgen. Dabei ist es günstig, dem Heizbalg eine solche Form zu geben, mit der er den Innenraum seitlich neben den Reifenwülsten 3 ausfüllt. Dies kann durch Hinzufügen von Heizschläuchen geschehen. Es sind jedoch keine starren metallischen Formringe an diesen Stellen erforderlich.

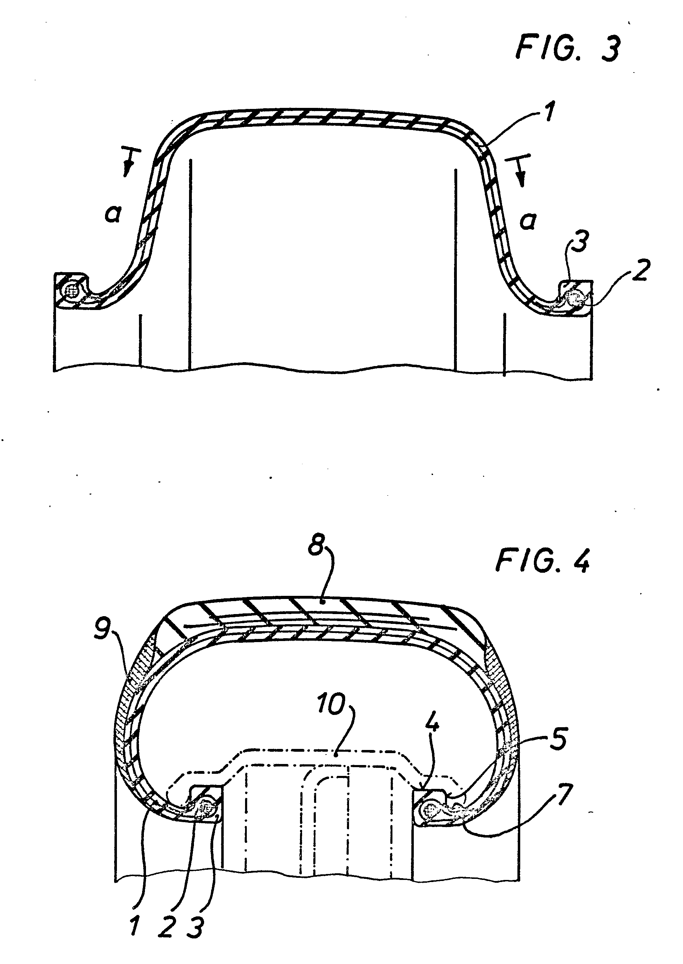

Fig. 4 zeigt den fertigvulkanisierten Reifen auf einer strichpunktiert angedeuteten Felge 10. Der Reifen befindet sich im wesentlichen spannungsfrei auf der Felge 10, weil er mit der gleichen Querschnittsform fertigvulkanisiert worden ist. Auch wird ein luftdichter Sitz der Reifens auf der Felge 10 gewährleistet, weil den hierfür entscheidenden Flächen 4, 5, 7 bereits bei der Vorvulkanisation eine glatte Oberfläche verliehen worden ist.

Fig. 3 zeigt eine etwas abgewandelte Variante der Reifenherstellung. Nachdem der Rohling gemäß Fig. 1 konfektioniert worden ist, wird er durch Aufblähen oder durch Erzeugung eines äußeren Vakuums von seiner zylinderförmigen Gestalt in die im Querschnitt gewölbte Form der Fig. 3 überführt. Dabei ist darauf zu achten, daß dem Rohling im Bereich der Wülste 3 und der Seitenwandabschnitte a bereits die endgültig gewünschte Reifenquerschnittskontur gegeben wird.

In dieser Stellung wird der Rohling vorvulkanisiert. Anschließend erfolgt seine Krempeln. Da die Karkasse 1 sich in der neutralen Zone der Rohlingswand befindet, liegen nach dem Krempeln keine Spannungen vor. Die weitere Vervollständigung des Reifenrohlings und die endgültige Vulkanisation erfolgt in der vorstehend ausführlich beschriebenen Weise, so daß gewährleistet ist, daß der vollständige Reifenrohling in der vollständige Reifenrohling in der Betriebsstellung des Reifens fertigvulkanisiert wird und der Reifen spannungsfrei auf eine Felge 10 montiert werden kann.

## Ansprüche

1. Verfahren zur Herstellung eines Fahrzeugluftreifens, der mit seinen Wülsten am radial inneren Umfang einer Felge montierbar ist und bei dem die Wülste relativ zu den Wulstkernen verschwenkbar sind, dadurch gekennzeichnet, daß zunächst die Karkasse mit den benachbarten Kautschukschichten und die Reifenwülste mit zug-und druckfesten Wulstkernen auf einer Wickeltrommel zu einem im wesentlichen zylinderförmigen Rohling zusammengefügt werden, wobei die spätere Reifeninnenseite nach radial außen weist und die Begrenzungsflächen der sich nach radial außen erstreckenden Reifenwülste mit der Zylinderwand des Rohlings im wesentlichen rechte Winkel einschließen, daß danach der Rohling zumindest im Bereich der Reifenwülste vorvulkanisiert wird, daß er anschließend gekrempelt und nach dem Einnehmen einer Toroidform mit dem Laufstreifen versehen und fertigvulkanisiert wird.

2. Verfahren nach Anspruch 1, dadurch gekennziechnet, daß die Reifenwülste bereits auf der Wickeltrommel vorvulkanisiert werden.

3. Verfahren nach Anspruch 1, dadurch gekennzeichnet, daß die Innenseele vor oder nach dem Krempeln des Rohlings aufgelegt wird.

4. Verfahren nach Anspruch 1, dadurch gekennzeichnet, daß der Rohling mit der Karkasse und den Reifenwülsten in eine Querschnittsform gebracht wird, bei der die Kontur der Reifenwülste und des größten Teils der Seitenwände bereits der Kontur am fertigen Reifen entspricht und bei der die Karkasse in der neutralen Faser verläuft, daß der Rohling in dieser Form vorvulkanisiert, danach gekrempelt, vervollständigt und fertigvulkanisiert wird.

5. Verfahren nach Anspruch 4, dadurch gekennzeichnet, daß das Vorvulkanisieren in einer Form ohne Heizbalg durchgeführt wird.

6. Nach dem Verfahren gemäß Anspruch 1 hergestellter Fahrzeugluftreifen, gekennzeichnet, durch eine im unteren Seitenwand-und Wulstbereich im wesentlichen waagerecht verlaufende Karkasse (1) und durch Reifenwülste (3), deren radial und axial äußeren Flächen (Sitzflächen 4, Begrenzungsflächen 5) eine Kontur aufweisen, die im entspannten Zustand des Reifens bereits im wesentlichen der Kontur der Felgensitzfläche und der Felgenhornsitzfläche entspricht.

FIG.1

FIG. 2

Continental
Gummi - Werke AG
Hannover

85 - 25 P

0 194 560

FIG. 3

FIG. 4

Continental
Gummi-Werke AG
Hannover

85 − 25 P